# EUROPEAN PATENT APPLICATION

(11) **EP 2 849 093 A1**
(43) Date of publication of application: **18.03.2015**
(21) Application number: 13306249.7
(22) Date of filing: 12.09.2013
(51) Int. Cl.: G06F 17/30

(54) **Method of displaying data associated with an image of an object, and corresponding device**

(71) Applicant: Thomson Licensing, 92130 Issy-les-Moulineaux (FR)
(72) Inventor: LEFEBVRE, Frédéric, 35576 Cesson-Sévigné (FR); CHEVALLIER, Louis, 35576 Cesson-Sévigné (FR); OISEL, Lionel, 35576 Cesson-Sévigné (FR)
(74) Representative: Perrot, Sébastien

(57) **Abstract**

The invention concerns a method of displaying data associated with an image of an object, corresponding receiver device and corresponding server device. The receiver device takes an image of an object. From this image data is extracted, that is transmitted to a server in a request for data related to the image. Based on the extracted data, the server searches for relevant documents in a database according to similarity between the extracted data and the data comprised in the searched documents, while the set of searched documents is reduced to documents that are associated to a geographical location of the receiver device where the image was taken. The receiver receives the result of the document search and displays it.

## Description

### 1. Field of invention

The field of the present invention concerns the retrieval of documents that are visually similar to an object viewed by a user.

### 2. Technical background

The advent of wireless digital networks has allowed the introduction of portable connected devices such as smartphones, tablets and mobile personal computers. Most of these connected devices have very powerful graphical display engines capable of rendering many types of multimedia documents. Users of these devices are now faced with a considerable quantity of multimedia documents of various types, such as audio, video, image, text, application/services, etc, to choose from. User interfaces for these devices must henceforth allow a user to navigate in multimedia databases in a powerful and user-friendly manner. The portable connected devices give a user access to mobile communication with a wireless network. Servers in the network immediately provide user-requested information at any time and in any place. For example, a person walking in a street observes an image or text, which incites this person to search further related information. If this person is observing a movie poster and wants to know the nearest movie theatre where the movie is on show, he can query a web site using his portable device. To do so, he enters the movie title in his portable device's web browser. Internet servers search for the movie title and return web links to related information. The user chooses one of these web links in his search for a list of movie theaters showing the movie; finally, he has to find more information about the geographical location of movie theaters showing the movie, ticket prices, show times, etc.. Despite the advanced possibilities that the new technology offers, the information search remains an iterative process that requires many steps of user intervention and that remains relatively tedious and time consuming.

There is therefore a need for a new technique that is more efficient for finding information related to observed images, texts or objects or for finding a related service requiring less iterative steps in a minimum of time, and offering a user-friendly operation by reducing the need to introduce search parameters.

### 3. Summary of the invention

The invention proposes a method of displaying data associated with an image of an object taken by a first device connected to a communication network. The method comprises a step of taking an image of an object by a camera of the first device; a step of determining a first geographical location; a step of extracting data representative of the image from the image; a step of transmitting, to at least a second device in the communication network, a request for data associated to the image, the request comprising the data representative of the image; a step of receiving data associated to said image from documents selected from a document database in said communication network according to similarity with the data representative of the image, whereby said data associated to said image is searched in a subset of documents in said document database that are associated to a second geographical location that is within a distance threshold from the first geographical location; and a step of displaying the received data on the first device.

According to this method, the searching of similarities is limited to a subset of documents and advantageously, this searching does not require powerful processing means.

According to a variant embodiment, the first geographical location is the geographical location of the first device where the image is taken. This variant advantageously allows the user of a device implementing the method to receive and display data that is related to the geographical location of the first device at the time the image was taken.

According to a variant embodiment, the geographical location is the geographical location of the first device when the request is transmitted. This variant is advantageous if the first device implementing the method of the invention has moved to a different geographical location since the image was taken and the user of the device wants to receive and display data that is related to the different geographical location.

According to a variant embodiment, the first geographical location is transmitted by the first device to the at least a second device in the communication network. This way, devices in the communication network do advantageously not need to determine the first geographical location, which decentralizes the charge of this operation.

According to a variant embodiment, the step of determining of the first geographical location is performed by one or more second devices in the communication network, for example by a wireless base station device, or by several wireless base stations, for example by triangulation or by knowledge of the communication cell in which the first device is located. This way, the first device does advantageously not need a geographical location determining means such as a global positioning means (GPS) which can be useful to lower its cost, and also can be interesting for more high end type of first devices that do comprise a geographical positioning means in areas where GPS positioning is difficult due to bad GPS signal reception.

According to another embodiment, the method comprises a step of selecting a set of documents from the document database according to a type of object from which the image is taken by the camera of the first device. The type of object can be determined from the extracted data that is representative of the image. This way, the subset of documents in which the step of determination of the portable device location is performed, is further reduced which speeds up the searching process.

According to another embodiment, at least two data items from the received data associated to the image are displayed on the first device, according to a display order that depends on a distance between a geographical location associated with each of the at least two data items and the first geographical location. This way, the user can easily select a data item according to the distance from the first geographical location.

According to another embodiment, at least two data items from the received data associated to the image are displayed on the first device, according to a display order that depends on a travel time that it takes for a user of the portable device to go from the first geographical location to a geographical location associated with each document. This way, the user can easily select a document according to the time to access to this document from the first geographical location.

According to another embodiment, the object corresponds to a movie poster of a movie on show in a movie theater. The data items that are received in the receiving step are then displayed according to a display order that depends on the show time of the movie on show. This way, the user can easily select a document according to show time that is closest to current time, or that corresponds to his availability.

According to another embodiment, the extraction step comprises an extraction of an image fingerprint from the image. This way, the data transmitted in the transmitting step is of reduced size as it comprises essential features of the image, that can be easily compared to other images in the document database by using well known fingerprint comparison techniques. As upload bandwidth for first devices is often limited compared to download bandwidth, this feature allows to shorten the delay caused by the transmission step.

The above embodiments can be combined between them to obtain a particular advantageous embodiment.

The invention also proposes a receiver device for displaying data associated with an image of an object taken by the receiver device, the receiver device being connected to a communication network. The receiver device comprises a camera for taking an image of an object; a data extractor for extracting data representative of the image from the image; a transmitter for transmitting, to at least one server in the communication network, a request for data associated to said image, said request comprising the data representative of the image; a receiver for receiving data associated to said image from documents selected from a document database in said communication network according to similarity with the data representative of the image, whereby the data associated to the image is searched in a subset of documents in said document database that are associated to said geographical location of the receiver device that is within a distance threshold from a determined first geographical location; and a display for displaying the received data on the receiver device.

According to a variant embodiment of the receiver device, the receiver device further comprises a geographical location determinator for determining the first geographical position.

The invention also proposes a server device connected to a communication network, comprising a receiver for receiving a request for data associated to an image, the request comprising data representative of an image of an object; a document selector for selecting documents from a document database in said communication network according to similarity with the data representative of the image, whereby said data associated to said image is searched in a subset of documents in said document database that are associated to a second geographical location that is within a distance threshold from a determined first geographical location; and a transmitter for transmitting data associated to said image from said selected documents.

The invention also proposes a non-transitory software product comprising instructions to carry out the steps of the method of the invention when these instructions are performed by a processing means.

### 4. List of figures

Other characteristics and advantages of the invention will become apparent with more details within the framework of the description, which follows from exemplary embodiments given by way of illustration while referring to the appended figures, which represent:
**Figure 1** depicts an example of a communication network connected to at least one portable device for the implementation of the invention.
**Figure 2** is a flowchart of steps performed according to a particular embodiment of the invention.
**Figure 3** is an exemplary screen views presenting data items that are related to the image according to the invention.

### 5. Detailed description of the invention

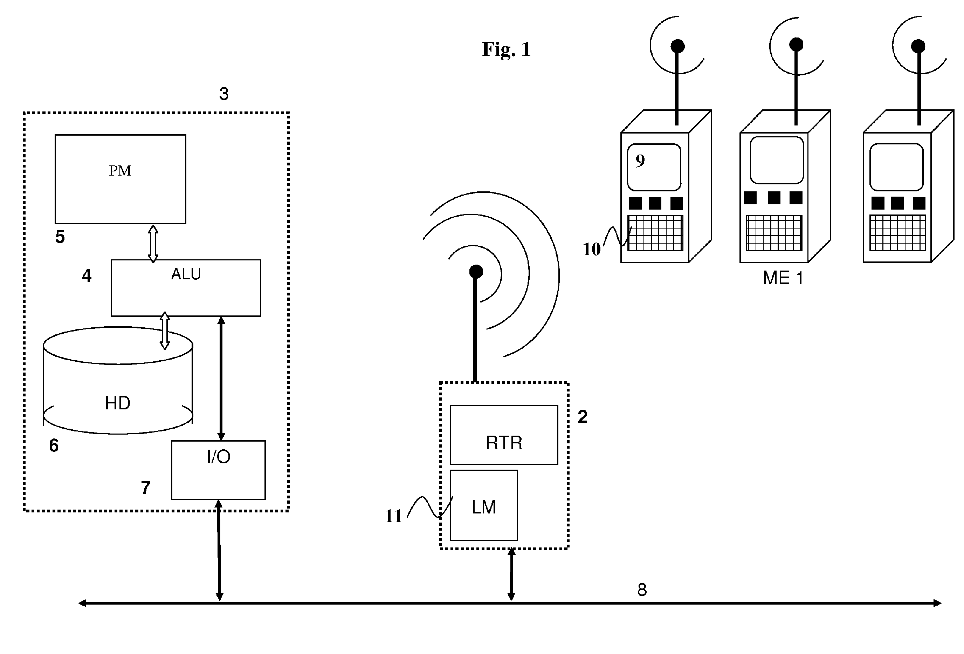

**Figure 1** shows the main elements for implementing the method according to a particular exemplary embodiment of the invention. A user has a mobile device 1 that communicates through a wireless network (e.g. 2G, 3G, 4G) with a base station 2. Fixed base 2 communicates at very high bandwidth with a plurality of servers 3 through wired or wireless communication lines. These servers are able to manage and control communications between all mobile devices and the base station, and rout the communication to various other networks, such as the Internet, where application servers are present for rendering services to the user of the mobile device.

The application server 3 comprises a central unit ALU 4 connected to an executable program memory 5. It comprises a searching module and a hard drive 6 containing a document database for non-volatile data storage. The server 3 also comprises an input/output interface I/O 7 for communication through a cable 8 or any other bidirectional wired or wireless network. For example, the server 3 is connected via a DSL (Digital Subscriber Line) to the Internet. Base station 2 shown in Figure 1 represents a well-known wireless communication system. RTR radio transmitters included in such systems are able to interact with mobile devices such as mobile 1, being for example phones, smartphones, laptops etc, in a range compatible with the RF (Radio Frequency) wireless communication networks such as 2G/GSM ("Global System Mobility technology") or 3G/UMTS ("Universal Mobile Telephone System technology"), or 4G LTE ("Long Term Evolution technology").

The base station 2 comprises geographical locating means for locating each of the mobile devices 1. According to a variant embodiment, the geographical location means is integrated in the mobile device 1 by a GPS module. Such means is usually implemented in high profile mobile devices, such as smartphones. For low profile devices, the network comprises a location module LM placed in the base station 2. The modules LM analyzes the radio wave propagation times between the mobile device and each fixed base, and by triangulation, determine the location of the portable devices; or, the LM modules can obtain the location by determining the communication cell in which the mobile device is located.

The mobile devices 1 comprise a screen 9, a keyboard 10, and (not shown in the figure 1) a CPU, a memory, a radio communication module communicating with the base station 2. The screen may be tactile, in which case there is no keyboard 10. The mobile device also has a camera and means for extracting data representative of an image from an image. The mobile device may be a mobile phone, a smartphone, a tablet, or any mobile device with image processing means.

The present example is given for devices 1 being mobile devices. However, the present invention does not require that the device 1 is a mobile device, without departing from the invention. Neither is device 1 necessarily a wireless device.

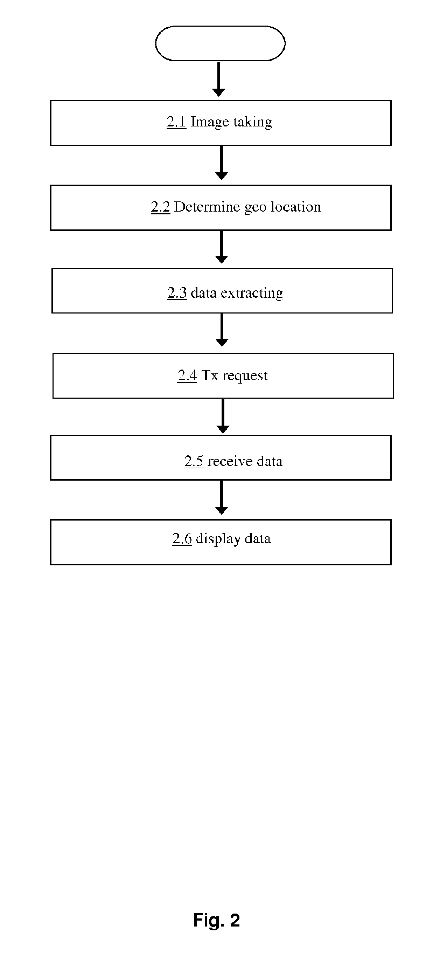

**Figure 2** is a flowchart of steps of a particular embodiment of the invention.

It is assumed that the user of device 1 is located in an area covered by a wireless network. This user needs to find data related to an image that he observes, which can be a web link, a document or a service. In a first step, depicted by and oval form, the device 1 is initialized. The device 1 checks the various hardware equipments needed for its operation and displays a user interface giving the user access to commands for the device 1 operation (for example, a list of icons). In a step 2.1, the user takes an image of an object with the device 1, the object being for example a movie poster, or a car. The image is recorded in the memory of the device 1. Then the user enters a command launching a search and retrieving of data associated to the recorded image according to the invention. In a step 2.3, the device 1 extracts data representative of the image content. This representative data is for example the complete image in compressed form, a text obtained by an optical character reading (OCR) process, biometric features characterizing a human face, an image fingerprint comprising graphical characteristics of the image or object recognized in the image, or any combination of these, and according to a variant embodiment augmented with metadata which can be useful for searching of documents in the document database and for targeting the search. For example, if the image is that of a movie poster object, it is likely that the user requires information on movie theaters where the movie is on show, and the search can be targeted to nearest movie theaters showing the movie. If the image is that of a book, it is likely that the user requires information about the book such as a summary, price and nearest bookshops where the book is on sale. If the image is that of a car, it is likely that the user is interested in a review, its price, and nearest point of sale. In each of these cases, metadata is extracted from the image in the step 2.3 and is included in the representative data. According to a variant embodiment, metadata is extracted from the representative data by a server in the communication network, which server advantageously has more powerful processing means than device 1 to extract the metadata. According to a variant embodiment, the previous variants are combined, leaving a first step of metadata extraction to device 1, and a second step of metadata extraction to the server in the communication network. This variant can be useful for example if the device 1 already has some means to extract metadata, such as facial recognition, nowadays a common feature in digital cameras for automatic control of light exposition and focus. The metadata extracted by the camera comprises the coordinates of rectangular regions in the image where a face is detected, whereas the metadata extracted by the server in the network will extract further metadata related to a recognition of the particular person corresponding to the face. In a step 2.4, the device 1 transmits a request for data associated to the image taken to the communication network, the request comprising the representative data, where the request is handled by one or more servers. In a step 2.2, a first geographical location is determined and in an optional step transmitted towards the server. As discussed, according to a variant embodiment the first geographical location is not determined by the device 1 and transmitted to the server but is calculated by one or more servers in the communication network, such as a base station 2. As mentioned, the first geographical location is that of the device 1 when the image is taken, of that of the device 1 when the request for data associated to the image is transmitted. The server in the communication network processes the received request, which may require a lot of processing power, especially if the document database in which the search is done is huge. To accelerate the processing of the request, the present invention provides filtering to reduce the number of database items searched. The filtering comprises reducing the number of documents searched to a subset according to their associated geographical location. A document is selected as part of the subset if the distance between its associated geographical location and the first geographical location is within a distance threshold. The distance threshold can be set by the user and/or be dependent on the means of transport available to the user. If the device 1 comprises a geographical location means, the means of transport can be deduced from the displacement speed of the user; this is information can be transmitted by the device 1 to the server in the communication network, and allows to give a value to the distance threshold. For example, if the displacement speed of the user of device 1 is that of a pedestrian, the distance threshold can be set to 20 minutes walking distance. If on the other hand the displacement speed of the user of device 1 is that of a car, the threshold can be set to 20 minutes driving distance. Optionally, the displacement speed information is transmitted to the server in a transmission step. Then, the server searches for matching documents in the document database by comparing the data representative of the image to data comprised in the subset of the document database. In an iterative process, if no matching document is found after a first search in a first subset of items, then the distance threshold increased so as to enlarge the subset of items, and a new search is executed on the documents of the subset that were not already searched. The server determines a list of at least one candidate document which contains an image that is similar to that taken by the device 1 and which is associated with a geographical location that is within the distance threshold. Then, data associated to the image taken by device 1, obtained from the list of at least one candidate document found by the server, is received (2.5) by the device 1 and displayed (2.6).

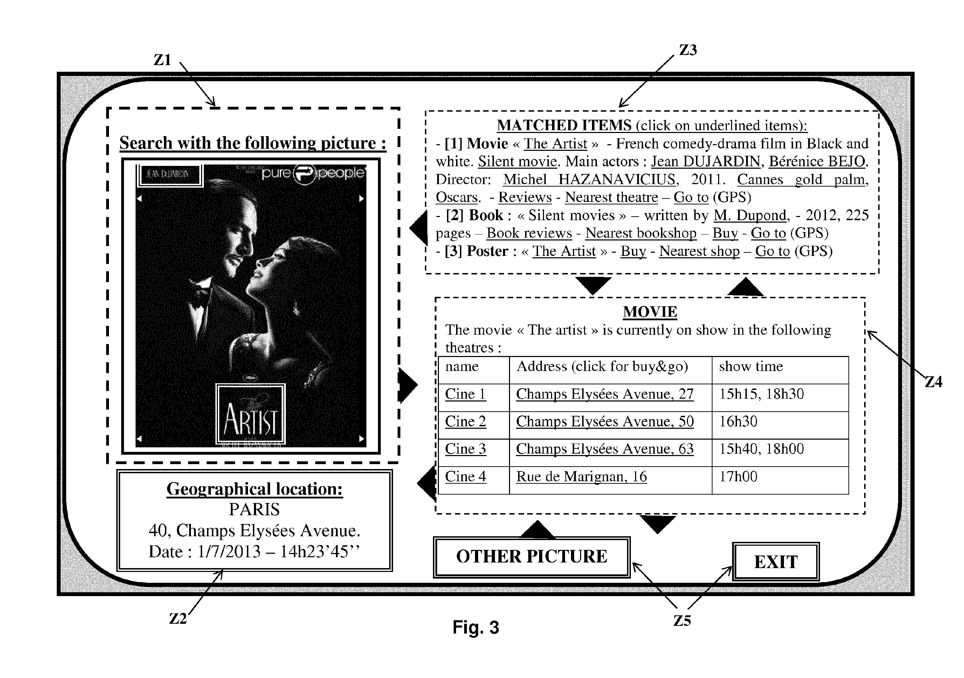

**Figure 3** shows an example of a screen appearance for displaying items found by the searching carried out by the application server. This menu is displayed after launching the application of searching items. The screen is in the form of a specific set of several zones:
- an image zone Z1 showing the picture taken by the camera embedded in user's portable device. This picture may display one or several windows showing characteristic element used for the search process: a text zone for example (in the figure, the texts "ARTIST" and "Jean DUJARDIN" are surrounded, or a human face.
- a geographical location zone Z2. This zone displays the location where the image was taken, or the geographical location of the device 1 when the document search request was transmitted to the server in the network; for example, a specific address or mere GPS coordinates. The zone Z2 can also display the time and date of the photo taken or of the moment of transmission of the document search request.
- a selected data items zone Z3 of data items found by the server. In this zone a list of items found is displayed starting with the data item that most likely replies to the user's request for information associated to the image taken by device 1. The likeliness may be determined according to a user profile defined by the user in a configuration menu of his device, or by exploitation of the previously discussed metadata, by the type of document found, or by a combination of these. In the example shown in Figure 3, the user has taken a photo of a movie poster of the movie "The Artist." As the image corresponds to a movie poster, the server finds a similar movie poster in the document data base, and there from determines that it is most likely that the user is interested in movie theaters where the movie is showing, and determines which theaters in the near neighborhood of the first geographical location where the movie is on show after the present time. As it may also be likely that the user is interested in buying a book related to the movie, the server searches for bookshops near the first location where the book can be bought. As it is further likely that the user is interested in buying the movie poster, the server searches for shops near the first geographical location selling the book. As shown in the figure in zone Z3, the first item found by the server on the network is the movie "The Artist", a second item is a book on " French movie actors", the third item is a movie poster. According to an advantageous embodiment, the user can select the underlined items, in order to get supplementary information, such as official information about the movie, information on the movie genre, on the actors, the producer, movie reviews of the movie, the nearest theatre, or even use the GPS of the device 1 to be guided to the nearest movie theatre where the movie is on show.

- a movie theater zone Z4. The zone Z4 displays a table of at least one movie theater showing the movie determined in the request, in the example of figure 3 : the movie "The Artist." Different movie theaters may be displayed in an order depending on the distance between the location where the picture was taken and the location of the movie theater. The displayed information relative to the selected movie theaters may comprise : the distance, the show times, the language, type (2D or 3D), ticket price; how to get there, or be guided by GPS to go there, or even "click for buy&go" to obtain a ticket for the movie in the nearest theatre for a show time that is within travel distance, and be guided to the theatre by GPS.
- a control zone Z5. The zone comprises for example a command icon to start a new taking of an image and start a new search. Another control icon allows ending the search.

Although the present invention has been described with reference to the illustrated particular embodiments, the examples given are not meant to limit the invention to the illustrated embodiments.

## Claims

1. A method of displaying data associated with an image of an object taken by a first device (1) connected to a communication network, **characterized in that** said method comprises the following steps:
taking (2.1) an image of an object by a camera of the first device;
determining (2.2) a first geographical location;
extracting (2.3) data representative of the image from the image;
transmitting (2.4), to at least a second device in the communication network, a request for data associated to said image, the request comprising said data representative of the image ;
receiving (2.5) said data associated to said image from documents selected from a document database in said communication network according to similarity with the data representative of the image, whereby said data associated to said image is searched in a subset of documents in said document database that are associated to a second geographical location that is within a distance threshold from said first geographical location; and
displaying (2.6) the received data on the first device.

2. The method according to claim 1, wherein said first geographical location is a geographical location of the first device when the image is taken.

3. The method according to claim 1, wherein said first geographical location is a geographical location of the first device when said request is transmitted.

4. The method according to claim 1 or 2, wherein the method further comprises a step of transmitting, by the first device, of said first geographical location to the at least a second device in the communication network.

5. The method according to claim 1 or 2, wherein said step of determining of the first geographical location is performed by at least a second device in the communication network.

6. The method according to any of claims 1 to 5, wherein said method further comprises a step of selecting a set of documents from said document database according to a type of object from which said image is taken by the camera of the first device.

7. The method according to any of claims 1 to 6, wherein said method further comprises a step of displaying on the first device of at least two data items from said received data associated to said image, the at least two data items being displayed in a display order according to a distance between a geographical location associated with each of the at least two data items and the first geographical location.

8. The method according to any of claims 1 to 6, wherein said method further comprises a step of displaying, on the first device, of at least two data items from said received data associated to said image, the at least two data items being displayed in a display order according to a travel time that it takes for a user of the first device to go from the first geographical location to a geographical location associated with each of the at least two data items.

9. The method according to any of claims 1 or 8, wherein the object corresponds to a movie poster of a movie on show in a movie theater, and said method further comprises a step of displaying, on the first device, of at least two data items from said received data according to a display order that depends on show time of the movie on show.

10. The method according to any of the previous claims, wherein the step of extracting data representative of the image comprises an extraction of an image fingerprint from said image.

11. A receiver device (1) for displaying data associated with an image of an object taken by said receiver device, said receiver device being connected to a communication network, **characterized in that** said receiver device comprises the following means:
a camera for taking an image of an object;
a data extractor for extracting data representative of the image from the image;
a transmitter for transmitting, to at least one server in the communication network, a request for data associated to said image, said request comprising the data representative of the image;
a receiver for receiving said data associated to said image from documents selected from a document database in said communication network according to similarity with the data representative of the image, whereby said data associated to said image is searched in a subset of documents in said document database that are associated to a second geographical location that is within a distance threshold from a determined first geographical location; and
a display for displaying the received data on the receiver device.

12. The receiver device according to claim 11, further comprising a geographical location determinator for determining said first geographical location.

13. A server device (3) connected to a communication network, **characterized in that** said server device comprises the following means:
a receiver for receiving (7) a request for data associated to an image, the request comprising data representative of an image of an object;
a document selector for selecting documents from a document database in said communication network according to similarity with the image, whereby said data associated to said image is searched in a subset of documents in said document database that are associated to a second geographical location that is within a distance threshold from a determined first geographical location; and
a transmitter for transmitting data associated to said image from said selected documents.

14. A non-transitory software product **characterized in that** it comprises instructions to carry out the steps of any of the method claims 1 to 10 when these instructions are performed by a processing means.
